# EUROPÄISCHE PATENTSCHRIFT

(11) **EP 0 418 729 B1**
(45) Veröffentlichungstag und Bekanntmachung des Hinweises auf die Patenterteilung: **29.09.1993**
(21) Anmeldenummer: 90117620.6
(22) Anmeldetag: 13.09.1990
(51) Int. Cl.: C04B 35/00, C04B 35/58, C04B 35/56, C04B 35/10

(54) **Verfahren zur Herstellung von mit keramischen Pulvern und oxidischen Sinteradditiven gefüllten Massen aus thermoplastischen Kunststoffen**
Process for producing thermoplastic pastes filled with ceramic powders and oxide sintering additives
Procédé de fabrication de pâtes thermoplastiques remplies de poudres céramiques et d'additifs oxydiques de frittage

(30) Priorität: 22.09.1989 DE 3931654
(43) Veröffentlichungstag der Anmeldung: 27.03.1991
(73) Patentinhaber: BASF Aktiengesellschaft, 67063 Ludwigshafen (DE)
(72) Erfinder: Sterzel, Hans-Josef, Dr., D-6701 Dannstadt-Schauernheim (DE)

(56) Entgegenhaltungen:
- EP-A- 0 266 641
- CHEMICAL ABSTRACTS, Band 108, Nr. 24, 13. Juni 1988, Zusammenfassung Nr. 209084y, Columbus, Ohio, US & JP-A-63 045 166 (TOYOTA MOTOR CORP.)

## Beschreibung

Keramische Teile aus Siliziumnitrid, Siliciumcarbid, oder Alumniumoxid vereinigen hohe Festigkeiten bei Temperaturen bis Zu 1 500°C, relativ hohe Bruchzähigkeiten und eine hohe Thermoschockbeständigkeit. Deshalb finden sie bereits vielfältige Anwendungen im Apparatebau, als Wärmetauscher oder im Motorenbau. Zur Fertigung großer Stückzahlen bei komplexer Geometrie der Teile wird vermehrt das Spritzgußverfahren eingesetzt. Dazu werden z.B. die keramischen Pulver mit thermoplastischen Kunststoffen gemischt und die mehr als 50 Vol.-% keramische Pulver enthaltenden Massen im Spritzgußverfahren zu komplexen Grünteilen verarbeitet. Danach wird die Polymermatrix beispielsweise durch Pyrolyse aus den Grünteilen entfernt und die Grünteile dann zur eigentlichen Keramik gesintert. Ein solches Verfahren ist zum Beispiel aus der JP-A-63 045 116 bekannt. Durch die Extrusionsverfahren lassen sich Rohre, Profile oder Bänder herstellen.

Es ist bekannt, daß kristallines Siliziumnitrid- oder Siliciumcarbid-Pulver nur in Gegenwart von Sinterhilfsmitteln zu mechanisch stabilen Formkörpern versintert werden kann. Als derartige Sinterhilfsmittel werden bei Siliciumnitrid, Aluminiumoxid, Boroxid, Magnesiumoxid und/oder Seltenerdoxide, vorzugsweise Yttriumoxid, in Mengen von 2 bis 10 Gew.-%, bezogen auf Siliziumnitrid, eingesetzt. Für Siliziumcarbid werden neben ca. 1 Gew.-% Kohlenstoff entweder 1 Gew.-% Alumniumoxid oder Boroxid eingesetzt. Für Aluminiumoxid werden zur Vermeidung des Korngrenzenwachstums geringe Mengen - unter 1 Gew.-% - an Siliziumdioxid oder Magnesiumoxid verwendet. Die Sinterhilfsmittel bilden nach geltender Lehrmeinung mit den Randbezirken der Siliziumnitrid-Pulverkörner eine amorphe, glasige Phase, in welcher der Stoffaustausch von Korn zu Korn und damit das Zusammensintern stattfindet. Idealerweise sollten dazu die Siliziumnitrid-Körner von einer dünnen Randzone an Sinterhilfsmitteln umgeben sein. Üblicherweise haben die Siliziumnitrid-Teilchen Abmessungen von 1 µm, und die Teilchen der Sinterhilfsmittel sind etwa gleich groß. Dies bedeutet eine schlechte Verteilung an Sinterhilfsmitteln und damit örtliche über- und Unterkonzentrationen. Um die Unterkonzentration auszugleichen, gibt man mehr Sinterhilfsmittel zu einem Ansatz hinzu als eigentlich notwendig ist. Dadurch wird der Anteil der intergranularen Glasphase im gesinterten Teil erhöht. Mit der Erhöhung des Glasphasenanteils nehmen aber die Temperaturfestigkeit, Korrosionsbeständigkeit, der Widerstand gegen unterkritisches Rißwachstum und die Kriechbeständigkeit ab.

Eine Methode zur gleichmäßigen Aufbringung von Sinterhilfsmitteln besteht z.B. darin, daß man das keramische Pulver mit einem in einem organischen Lösungsmittel gelösten Metallalkoxid vermischt, trocknet und anschließend das Metallalkoxid hydrolysiert. Das Verfahren hat den Nachteil, daß viele Alkoxide flüchtig sind, was zu Problemen bei der Handhabung führt (DE-OS 36 37 506). Eine andere Methode besteht darin, daß man die keramischen Pulver mit in Wasser gelösten Salzen des Sinterhilfsmittels behandelt, die thermisch in die entsprechenden Oxide übergeführt werden können. Der vorliegenden Erfindung lag die Aufgabe zugrunde, ein Verfahren zur Herstellung von mit keramischen Pulvern und oxidischen Sinteradditiven gefüllten Massen aus thermoplastischen Kunststoffen bereitzustellen, das die Nachteile der bekannten Verfahren vermeidet und das es gestattet, in einem Arbeitsgang Massen aus thermoplastischen Kunststoffen die mit oxidischen Sinteradditiven modifizierte keramische Pulver enthalten, herzustellen.

Die Aufgabe wird erfindungsgemäß dadurch gelöst, daß man die thermoplastischen Kunststoffe in einer aus mehreren hintereinanderliegenden Zonen bestehenden Mischstrecke in einer ersten Zone aufschmilzt, in einer daran anschließenden zweiten Zone dem geschmolzenen Kunststoff eine Suspension von keramischen Pulvern in einem organischen Lösungsmittel, das hydrolysierbare Vorläuferverbindungen der oxidischen Sinteradditive gelöst enthält, zudosiert und mit dem geschmolzenen Kunststoff vermischt, in einer dritten Zone der Mischung die für die Hydrolyse der Vorläuferverbindungen erforderliche Menge Wasser zusetzt, in einer vierten Zone Lösungsmittel und flüchtige Hydrolyseprodukte unter vermindertem Druck abzieht und in einer fünften Zone die das keramische Pulver enthaltende Schmelze komprimiert und extrudiert.

Das erfindungsgemäße Verfahren wird in marktgängigen Extrudern durchgeführt, deren Förder, -Knet- und Mischelemente den Bedürfnissen entsprechend baukastenartig zusammengesetzt werden. Vorzuziehen sind Doppelwellenextruder, weil diese selbstreinigend sind und ein schmales Verweilzeitspektrum aufweisen. Im vordersten Teil des Extruders wird das Thermoplastgranulat zudosiert. Es schließt sich die Aufschmelzzone an. Die Pulversuspension mit den gelösten Vorläuferverbindungen wird erst in die aufgeschmolzene Masse gepumpt. Damit wird vermieden, daß die Pulversuspension mit dem noch nicht plastifizierten Thermoplasten zusammenkommt und an dieser Stelle ein erhöhter Metallabrieb aufgrund der hohen Scherkräfte zustande kommt. Es ist auch möglich, die Vorläuferverbindung getrennt von der Pulversuspension zu einer weiteren Mischzone des Extruders zuzupumpen.

Nach dem Zusammenfluß von Schmelze und Suspension schließt sich eine Mischzone an, in welcher Suspension und Schmelze homogen gemischt werden. In der nächsten Zone wird der Schmelze die für die Hydrolyse der Vorläuferverbindungen erforderliche Menge Wasser zugesetzt und hydrolysiert. Das Wasser kann auch Borsäure enthalten, falls Bortrioxid als Sinterhilfsmittel für Siliciumcarbid eingeführt werden soll. Die Teilchengröße der im Extruder erzeugten Sinteradditive beträgt 5 bis 100 nm, je nach Verfahrensbedingungen. Die Teilchengröße läßt sich steuern, indem man nicht reines Wasser zumischt, sondern das Wasser mit wassermischbaren organischen Lösungsmitteln, wie N-Methylpyrrolidon, Dimethylformamid, N,N-Dimethylformamid, Acetamid, i-Propanol, Ethylenglykol, Butandiol oder Monohydroxiglykolethern verdünnt. Es wurde gefunden, daß die Sinteradditivteilchen um so kleiner sind, je mehr das Wasser mit diesen Lösungsmitteln verdünnt ist. Umgekehrt kann die Teilchengröße auch dadurch gesteuert werden, daß das Wasser Ammoniak enthält, wobei mit steigenden Ammoniakgehalten auch die Partikelgröße erhöht wird. Danach wird das Lösungsmittel und der durch Hydrolyse entstandene Alkohol über einen oder mehrere Entgasungsdome unter vermindertem Druck abdestilliert. Es schließt sich eine Kompressionszone an, in der die weitgehend vom Lösungsmittel befreite Masse komprimiert wird, bevor sie durch Düsen extrudiert wird. Die extrudierten Stränge werden gekühlt und zu Granulat abgeschlagen.

Als thermoplastische Kunststoffe sind beispielsweise geeignet Polyacrylate, Äthylcellulose, ABS, Hydroxypropylcellulose, Polyäthylen hoher und niedriger Dichte, oxydiertes Polyäthylen, Celluloseacetat, Polyamide, Äthylen-Acrylsäure-Copolyerisate, Celluloseacetatbutyrat, Polystyrole, Polybutylen, Polysulfone, Polyäthylenglykole und Polyäthylenoxide. Besonders geeignet ist Polyoximethylen und dessen Copolymerisate.

Der aufgeschmolzene Kunststoff wird erfindungsgemäß in der zweiten Zone mit einer Suspension eines keramischen Pulvers in einem organischen Lösungsmittel vermischt. Als keramische Pulver kommen beispielsweise die Oxide, Nitride und Carbide der Elemente der 3. und/oder 4. Haupt- oder Nebengruppe des Periodischen Systems in Frage, z.B. vorzugsweise Si-carbid, Si-Nitrid oder Aluminiumoxid. Besonders bevorzugt ist aber Siliciumnitrid. Die keramischen Pulver haben zweckmäßig eine Körnung von ≦ 5 µm, vorzugsweise von 0,2 bis 2 µm. Diese keramischen Pulver werden in einem organischen Lösungsmittel suspendiert, das den jeweils eingesetzten Kunststoff zu lösen vermag. Beispiele sind Decalin oder Xylol für Polyethylen und Polyethylen/Wachs-Mischungen, Diglykoldimethylether für Polystyrol und Copolymeren mit Acrylnitril oder Benzylalkohol für Polyethylenterephthalat, Polybutylenterephthalat, Polyamid 6 oder 6.6, Polyoximethylen oder Polysulfone.

Die Suspensionen enthalten ferner gelöste hydrolysierbare Vorläuferverbindungen der oxidischen Sinteradditive. Als oxidische Sinteradditive kommen insbesondere Aluminium-, Magnesium-, Yttrium-Oxid, Siliciumdioxid in Frage.

Die Vorläuferverbindungen der oxidischen Sinteradditive werden entweder als Alkoxide oder als Lösungen von Carboxylaten, gegebenenfalls zur Stabilisierung mit zusätzlichen eingemischten Komplexbildnern, eingesetzt.

Als Alkoxide werden beispielsweise Aluminiumalkoxide wie Aluminiumisopropoxid oder Aluminiumsekundärbutoxid; Yttriumalkoxide wie Yttriumisopropoxid; Magnesiumalkoxide wie Magnesiumethoxid oder Magnesiumpropoxid gegebenenfalls wegen der hohen Schmelzpunkte von 200 bis 300°C gelöst in Lösungsmitteln wie Diethylglykoldimethylether, Siliziumalkoxide wie Tetraethylsilikat verwendet. Als Carboxylate lassen sich beispielsweise die Formiate, Acetate, Propionate wie auch die Salze höherer Carbonsäure wie Stearate wie auch die Salze mehrwertiger Carbonsäuren oder Hydroxicarbonsäuren wie Citrate der Metalle Aluminium, Magnesium oder Yttrium einsetzen. Zusätzliche Komplexbildner sind beispielsweise Citronensäure, Alkanolamine sowie aliphatische Diamine oder Triamine.

Falls erforderlich, werden bei der Herstellung der Suspensionen die keramischen Pulver einer desagglomerierenden Behandlung unter der Einwirkung von Scherkräften, z.B. in Kugelmühlen, gegebenenfalls in Gegenwart von Dispergierhilfsmitteln unterzogen. Der Volumenanteil der Pulver im Suspensionsmittel ergibt sich durch Optimierung der Bedingungen: Einerseits soll er möglichst groß sein, um möglichst wenig Lösungsmittel im Extruder abdestillieren zu müssen, andererseits darf die Viskosität der Suspension den Desagglomerationsvorgang nicht behindern. Zudem muß die Suspension noch pumpbar sein. Es hat sich gezeigt, daß Volumengehalte von 10 bis 35 %, vorzugsweise von 25 bis 33 %, zu optimalen Ergebnissen führen. Falls mit Volumengehalten unterhalb von 25 % desagglomeriert werden muß, kann die Suspension durch teilweises Verdampfen des Lösungsmittel aufkonzentriert werden. Es ist auch möglich, die Desagglomerierung in einem niedrigsiedenden Suspensionsmittel oder Suspensionsmittelgemisch bei niedrigen Volumengehalten durchzuführen und danach ein höhersiedendes, mit dem niedrigsiedenden Suspensionsmittel mischbares Suspensionsmittel zuzusetzen und das oder die niedrigsiedenden Suspensionsmittel abzudestillieren.

Diese Vorgehensweise ist besonders dann angebracht, wenn das eigentliche Suspensionsmittel eine erhöhte Dichte und/oder Viskosität aufweist und damit die Desagglomeration durch Mahlen erschwert.

Überraschenderweise tritt bei der erfindungsgemäßen Verfahrensweise keine Reagglomeration der Pulver auf. Die Güte der Desagglomeration in der Suspensionsstufe bleibt völlig erhalten.

Die Verweilzeit im Extruder beträgt nur 1 bis 5 Minuten, so daß der Thermoplast kaum geschädigt wird und nahezu kein Molmassenabbau stattfindet. Außerdem ist der Materialabrieb extrem gering.

Es gelingt mit dem erfindungsgemäßen Verfahren porenfreie thermoplastische Massen mit einem Volumenfüllgrad von 40 bis 80 % an keramischen Pulvern herzustellen. Die keramischen Pulver sind in der thermoplastischen Masse homogen verteilt.

Ein wesentlicher Vorteil des Verfahrens ist seine hohe Wirtschaftlichkeit. In einem einzigen Verfahrensschritt werden weitestgehend agglomeratfreie und mit feinstverteilten Sinteradditiven versehene Keramik-Spritzgußmassen mit hohen Stundendurchsätzen erzeugt.

Die folgenden Beispiele vedeutlichen die Vorteile der Erfindung

### Vergleichsbeispiel 1:

Eine Suspension aus 670 ml Benzylalkohol, 1,2 g Hydroxistearinsäure und 330 ml (1023 g) Siliziumnitrid-Pulver der Korngröße 0,5 bis 1,5 µm wurde durch Mahlen in einer Rührwerkskugelmühle desagglomeriert. Zu der erhaltenen, gut pumpbaren Suspension wurden 96,6 g Aluminiumtrisekundärbutoxid und 75,6 g Yttriumtriisopropoxid gemischt, um nach erfolgter Hydrolyse 20 g Aluminiumoxid und 45 g Yttriumoxid zu erhalten. Danach wurde eine Mischung von 36,2 ml Wasser und 90 ml i-Propanol eingerührt. Die Suspension erhöhte ihre Viskosität und war nicht mehr rührbar.

### Beispiel 2:

Mittels einer Rührwerkskugelmühle wurden 100 kg Siliziumnitrid mit einer Korngröße von 0,5 bis 1,5 µm in 70 l Benzylalkohol, denen 1,2 kg Hydroxistearin-säure zugemischt war, 3 h lang agglomeratfrei gemahlen. Die Partikelgrößenverteilung wies ein Maximum bei 0,9 µm auf. Nach dem Desagglomerieren wurden in der Suspension 9,75 kg Al-sec-Butoxid und 6,77 kg Yttriumisopropoxid gelöst, um nach der Hydrolyse und Wärmebehandlung 2,02 kg Aluminiumoxid und 4,0 kg Yttriumoxid zu ergeben.

Die so erhaltene Mischung wurde mit einem Volumenstrom von 26,4 l/h in einen Doppelwellenextruder gepumpt und dort bei 190°C mit einer Polyoximethylenschmelze vermischt, die mit einem Massenstrom von 8,0 kg/h im Extruder aufgeschmolzen und gefördert wurde. Das eingesetzte Polyoximethylen wird charakterisiert durch einen Schmelzindex von 13 g/10 min, gemessen nach DIN 53 479 bei 190°C und 2,1 kg Belastung.

Zu der Mischung aus Polyoximethylenschmelze und der desagglomerierten Siliziumnitrid-Dispersion wurde nach 20 bis 30 Sekunden Mischzeit im Extruder eine Mischung aus 0,9 l Wasser und 0,9 l N-Methylpyrrolidon mit einem Volumenstrom von 1,8 l/h zugepumpt.

Aus dem sich anschließenden Entgasungsteil des Extruders wurden bei einem Druck von 10 bis 30 mbar der Benzylalkohol, Sekundärbutanol, Isopropanol und N-Methylpyrrolidon abgezogen. Die durch die Düsen gepreßten Stränge wurden gekühlt und granuliert. Das Granulat bestand zu 70 Vol.-% aus Siliziumnitrid, dem Al₂O₃ oder Al-oxidhydrat, dem Y₂O₃ oder Y-Oxidhydrat sowie dem Polyoximethylen und der Hydroxistearinsäure. Die Aluminium- und Yttriumoxidteilchen wiesen Korngrößen um 30 nm auf.

### Beispiel 3:

Beispiel 1 wurde wiederholt mit dem Unterschied, daß eine Mischung aus 0,9 l Wasser und 2,3 l N-Methylpyrrolidon zur Hydrolyse der Metallalkoxide mit einem Volumenstrom von 3,2 l/h zugepumpt wurde. Die Aluminium- und Yttriumoxidteilchen wiesen Korngrößen um 15 nm auf.

### Beispiel 4:

Beispiel 1 wurde wiederholt mit dem Unterschied, daß eine Mischung aus 0,9 l Wasser, 0,9 l N-Methylpyrrolidon und 36 g 25 gew.-%iger wäßriger Ammoniaklösung mit einem Volumenstrom von 1,8 l/h zugepumpt wurde. Die Aluminium- und Yttriumoxidteilchen wiesen Korngrößen um 15 - 20 nm auf.

## Patentansprüche

1. Verfahren zur Herstellung von mit keramischen Pulvern und oxidischen Sinteradditiven gefüllten Massen aus thermoplastischen Kunststoffen dadurch gekennzeichnet, daß man die thermoplastischen Kunststoffe in einer aus mehreren hintereinanderliegenden Zonen bestehenden Mischstrecke in einer ersten Zone aufschmilzt, in einer daran anschließenden zweiten Zone dem geschmolzenen Kunststoff eine Suspension von keramischen Pulvern in einem organischen Lösungsmittel, das hydrolisierbare Vorläuferverbindungen der oxidischen Sinteradditive gelöst enthält, zudosiert und mit dem geschmolzenen Kunststoff vermischt, in einer dritten Zone der Mischung die für die Hydrolyse der Vorläuferverbindungen erforderliche Menge Wasser zusetzt, in einer vierten Zone Lösungsmittel und flüchtige Hydrolyseprodukte unter vermindertem Druck abzieht und in einer fünften Zone die das keramische Pulver enthaltende Schmelze komprimiert und extrudiert.

2. Verfahren nach Anspruch 1, dadurch gekennzeichnet, daß das zugesetzte Wasser durch mit Wasser mischbare organische Lösungsmittel verdünnt ist.

3. Verfahren nach Ansprüchen 1 und 2, dadurch gekennzeichnet, daß das zugesetzte Wasser Ammoniak enthält.

4. Verfahren nach Ansprüchen 1 bis 3, dadurch gekennzeichnet, daß man als Suspensionen eines keramischen Pulvers in einem organischen Lösungsmittel solche einsetzt, die einer desagglomerierenden Behandlung durch Einwirkung von Scherkräften unterzogen worden sind.

5. Verfahren nach Ansprüchen 1 bis 4, dadurch gekennzeichnet, daß die Vorläuferverbindungen Alkoxide und/oder Carboxylate der Elemente der oxidischen Sinteradditive sind.

6. Verfahren nach Ansprüchen 1 bis 5, dadurch gekennzeichnet, daß das für die Hydrolyse eingesetzte Wasser Borsäure enthält.

## Claims

1. A process for preparing a thermoplastic composi- tion filled with a ceramic powder and an oxidic sinter additive, which comprises melting the thermoplastic in a first zone of a mixing section consisting of a plurality of successive zones, admixing the molten plastic in an adjoining second zone with a suspension of a ceramic powder in an organic solvent which contains a hydrolyz- able precursor compound of the oxidic sinter additive in solution, adding the amount of water required for hydro- lyzing the precursor compound to the mixture in a third zone, removing the solvent and any volatile hydrolysis products under reduced pressure in a fourth zone, and compressing and extruding the melt containing the ceramic powder in a fifth zone.

2. A process as claimed in claim 1, wherein the added water has been diluted with a water-miscible organic solvent.

3. A process as claimed in claim 1, wherein the added water contains ammonia.

4. A process as claimed in claim 1, wherein the suspension of a ceramic powder in an organic solvent has been subjected to a deagglomerating treatment under the action of shearing forces.

5. A process as claimed in claim 1, wherein the precursor compound is an alkoxide or carboxylate of the elements of the oxidic sinter additive.

6. A process as claimed in claim 1, wherein the water used for the hydrolysis contains boric acid.

## Revendications

1. Procédé de préparation de masses de matières synthétiques thermoplastiques chargées de poudres céramiques et d'additifs de frittage du type oxyde, caractérisé en ce qu'on fond les matières thermoplastiques dans une première zone d'un trajet de mélange composé de plusieurs zones successives, on ajoute en quantité dosée et on mélange à la matière plastique fondue, dans une deuzième zone située à la suite, une suspension de poudre céramique dans un solvant organique, qui contient en solution des composés hydrolysables progéniteurs des additifs de frittage du type oxyde, on ajoute au mélange, dans une troisième zone, la quantité d'eau nécessaire pour l'hydrolyse des composés progéniteurs, on chasse, dans une quatrième zone, le solvant et les produits volatils d'hydrolyse sous pression réduite, et on comprime et on extrude, dans une cinquième zone, la masse fondue contenant la poudre céramique.

2. Procédé selon la revendication 1, caractérisé en ce que l'eau ajoutée est diluée avec des solvants organiques miscibles à l'eau.

3. Procédé selon la revendication 1 ou 2, caractérisé en ce que l'eau ajoutée contient de l'ammoniac.

4. Procédé selon l'une quelconque des revendications 1 à 3, caractérisé en ce qu'on utilise, comme suspensions d'une poudre céramique dans un solvant organique, des suspensions qui ont été soumises à un traitement de désagglomération sous l'action de forces de cisaillement.

5. Procédé selon l'une quelconque des revendications 1 à 4, caractérisé en ce que les composés progéniteurs sont des alcoxydes et/ou des carboxylates des éléments des additifs de frittage du type oxyde.

6. Procédé selon l'une quelconque des revendications 1 à 5, caractérisé en ce que l'eau utilisée pour l'hydrolyse contient de l'acide borique.
